# EUROPEAN PATENT SPECIFICATION

(11) **EP 1 228 389 B1**
(45) Date of publication and mention of the grant of the patent: **28.05.2003**
(21) Application number: 00973105.0
(22) Date of filing: 09.11.2000
(51) Int. Cl.: G02B 6/44

(54) **OPTICAL FIBRE MANAGEMENT**
FÜHRUNG VON GLASFASERN
GESTION DE FIBRES OPTIQUES

(30) Priority: 10.11.1999 GB 9926487
(43) Date of publication of application: 07.08.2002
(73) Proprietor: Tyco Electronics Raychem NV, 3010 Kessel-lo (BE)
(72) Inventor: WAMBEKE, Alain, B-3440 Zoutleeuw (BE); SEGERS, Frank, B-3360 Bierbeek (BE)
(74) Representative: Jay, Anthony William
(86) International application number: GB0004297
(87) International publication number: WO01035142

(56) References cited:
- EP-A- 0 593 927
- WO-A-97/30370
- PATENT ABSTRACTS OF JAPAN vol. 007, no. 198 (P-220), 2 September 1983 (1983-09-02) & JP 58 098714 A (NIPPON DENSHIN DENWA KOSHA;OTHERS: 01), 11 June 1983 (1983-06-11)

## Description

The present invention relates to the management of optical fibre cables. More in particular, the present invention relates to a rack for optical fibre management, comprising a longitudinal arrangement of connection units for connecting optical fibre cables and a longitudinal arrangement of guide members for guiding optical fibre cables to and/or from the connection units. An example of such a rack is described in International Patent Application WO 01/31380 (Raychem). Another example of an optical fibre management rack is disclosed in International Patent Application WO 97/30370 (Raychem).

Such racks are used for connecting, splicing and organising fibre optic cables. It will be understood that the term "fibre optic cable" as used here may comprise both single and multi fibre cables and may comprise so-called "pigtails" and "jumper" type cables.

These racks may accommodate several, in fact ten or more connection units, for instance in a stacked arrangement. The connection units may comprise a base plate slideably arranged in a housing as described in for example Dutch Patent NL 1013718 (Raychem). The base plate may accommodate splice holders, patch panels and/or slack storage means. The housing is provided with at least one access port.

To support and guide the cables entering and leaving the connection units via their respective access ports, guide members may be arranged near the connection units. In conventional arrangements, a single guide member (often called "spool" and having a circular or semi-circular cross-section) is usually located next to each connection unit at a small distance from its port. In such an arrangement, each cable leaving a connection unit is guided directly to the associated guide member facing the port.

Cables may be connected to the connection units from outside the rack or may be used to interconnect the units. Due to the various distances between the connection units in the rack different cable lengths are required to reach the different units. The more connection units are present in a rack, the more different cable lengths are required. Especially in modern high-density fibre optic cable management racks this poses a problem.

To ensure that all units can be reached irrespective of their position within the rack, usually fairly long cables are used. However, many cables will be too long, requiring storage of the overlength. This overlength storage has to be a properly organised and systematic storage to allow later modifications to the routing of the cables.

Japanese Patent Application JP 58-098714 (Furukawa) discloses an arrangement for optical fibre management. Two guiding members are located next to a stack of trays having ports into which connectors can be inserted.

It is an object of the invention to provide a rack having a versatile yet compact and economical routing of fibre optic cables, allowing a substantially uniform cable length to be employed.

It is another object of the invention to provide a rack allowing a substantially uniform cable length yet having a relatively small number of guide members.

It is yet another object of the invention to provide a method of organising fibre optic cables in a rack containing connection units and guide members.

To achieve these and other objects and to avoid the problems and disadvantages of the Prior Art the present invention provides a rack for optical fibre management, according to claim 1.

By increasing the distances of the main guide members from their respective associated ports the decrease of their distances from the auxiliary guide member is effectively compensated, resulting in a substantially uniform overall cable length. This increase is effected by the mutual spacing of the main guide members relative to the mutual spacing of the associated ports. The association between a port and a (main) guide member is determined by the number and sequence of the guide members.

The invention, therefore, provides cable trajectories having a substantially uniform length, each cable trajectory extending from a connection unit via a first respective main guide member and the auxiliary guide member either
1. to a rack access port, or
2. via a second respective main guide member to a connection unit access port.

In an advantageous embodiment, the number of main guide members is approximately half the number of connection units. In this embodiment, a rack according to the invention is obtained which has a small number of components.

Advantageously, a further array of connection units is substantially aligned with the connection units array while a further guide members array and a further additional guide member are positioned so as to substantially duplicate or mirror the guide members array and the auxiliary guide member. Thus by duplicating substantially in mirror image the basic layout, a larger number of connection units can be accomodated while using only a small number of guide members. Although duplication of the arrays within a rack is possible without using a mirror image layout, the mirrored arrangement makes it much simpler to guide cables from one connection unit array to the other.

A convenient layout of the components and a proper dimensioning of the cable trajectories is obtained in a rack according to the invention in which the guide members within an array and the connection units within an array have an approximately equal mutual spacing. In an alternative embodiment, however, the (ports of the) connection units have a greater mutual spacing than the guide members. In general, therefore, the present invention provides a rack in which the mutual spacing of the (access ports of the) connection units is at least as big as the mutual spacing of the (main) guide members.

In an advantageous and space saving embodiment, the regular guide members have a semicircular cross-section and the additional guide member has a substantially circular cross-section.

The present invention further provides a method of organising fibre optic cables in an optical fibre management rack according to claim 8.

The invention will further be described with reference to exemplary embodiments illustrated in the accompanying drawings, in which:
Figure 1 schematically shows a front view of a first embodiment of a rack of the present invention.
Figure 2 schematically shows a front view of a second embodiment of a rack of the present invention.
Figure 3 schematically shows a front view of a third embodiment of a rack of the present invention.
Figure 4 schematically shows a front view of a fourth embodiment of a rack of the present invention.

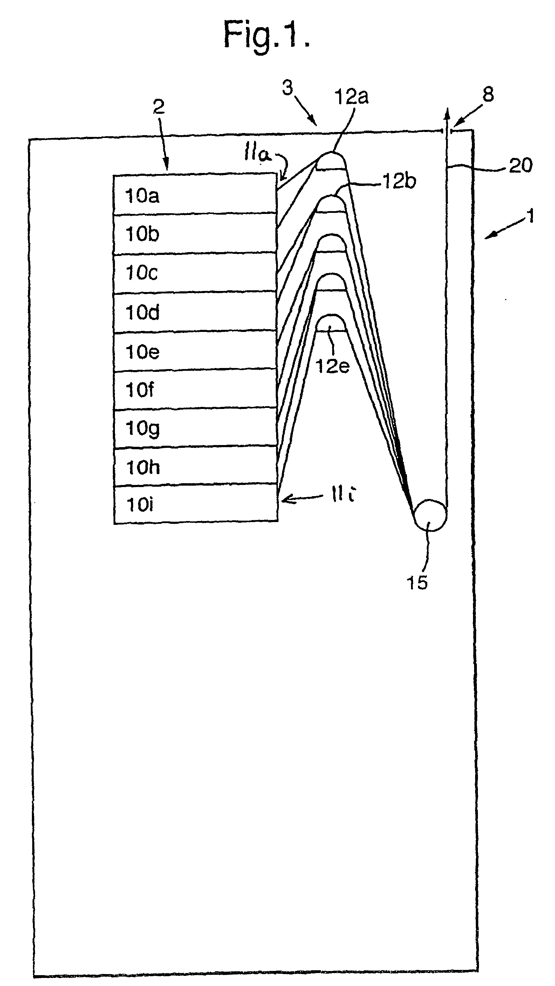

The rack 1 shown by way of non-limiting example in Fig. 1 contains a number of connection units 10 for connecting, splicing and/or arranging optical fibres. These connection units, which are arranged in a column 2 and are individually designated 10a-10i, preferably comprise shelf-like structures on which patching and/or splicing trays may be accommodated and which may be pulled forward in a drawer-like fashion. Each connection unit 10 may have an individual housing with an access port 11, through which a cable 20 can enter or exit the unit. The connection units 10 may be provided with additional access ports (not shown), which may be located at the back of the units. An example of a connection unit suitable for use in the rack 1 is disclosed in above-mentioned Dutch Patent NL 1013718.

Fibre optic cables 20 are led from the units 10 by guide members or spools 12 which have a curved surface so as to guide the cables maintaining at least their minimum bend radius. Although Fig. 1 shows spools 12 having a half-circle cross section, fully cylindrical spools may be substituted for some or all spools in Fig. 1. The spools 12, which are individually designated 12a-12e, are arranged in a column 3.

It is noted that fibre optic cables 20 may each contain a single optical fibre or a plurality of optical fibres. It is further noted that the direction of "travel" of the cables 20 through the rack is used for descriptive purposes only and that the actual direction in which the cables are led through the rack on installation may vary.

The rack 1 of Fig. 1 is further provided with an auxiliary or redirection spool 15 which is spaced apart from the regular spools 12. The redirection spool 15 is, in the embodiment shown, located at approximately the same height as the lowest unit 10i, that is, at a distance from the lowest guide member 12; and spaced apart from the centre line (that is, the longitudinal axis) of the column 3. The redirection spool 15 is preferably fully cylindrical and has a radius which is at least equal to the minimum bend radius of the optical fibres contained in the cables.

In conventional racks, the cables 20 would be led directly from each main spool 12 to an associated access port of the rack. This causes the problem, however, of very unequal cables lengths. That is, cables 20 connected to the top connection unit 10a would be much longer at the point where they left the rack (for instance through its top surface at port 8) than cables originating from the bottom connection unit 10i, which is clearly undesirable. Also, it would be difficult or even impossible to reconnect cables 20, for instance from the bottom connection unit 10i to the top one 10a.

Due to the position of the main guide members 12 and the spaced apart auxiliary guide member 15 relative to the connection units 10, all connection units 10 can be reached using a single cable length. The cable 20 originating from a top rack port 8 is fed via the redirection spool 15 and led up over an appropriate spool 12, down to an associated connection unit 10. For example, the trajectory from port 8 to unit 10b is (approximately) equal in length to the trajectory from port 8 to unit 10i. It is noted that in the preferred embodiment shown, the spools 12 are located just above the adjacent connection units 10, the bottom surface of the spool being approximately level with the top surface of the adjacent connection unit. It follows that the spacing of the spools 12 is identical to the spacing of the connection units 10.

By appropriately choosing a spool 12 with respect to a target connection unit 10, the trajectory of the cable 20 through the rack 1 can be varied to a great extent. In addition, the rack 1 of the present invention offers a great flexibility, while having only a limited number of spools 12. In the example shown, five spools 12 are provided for the nine connection units present. That is, the number of spools 12 need only be approximately half that of units 10, thus leading to an economical design.

As shown in Fig. 1, spool 12a services both connection units 10a and 10b. Likewise, spool 12b serves both connection units 10c and 10d. Spool 12e only serves connection unit 10i. While in conventional racks each connection unit 10 is served by a separate spool 12, it has been found that a substantial reduction in the number of components is achieved while obtaining nearly ideal results by having most spools serve two rather than one connection unit. It will be understood that in the example of Fig. 1 spool 12a could only serve connection unit 10a, spool 12e serving both connection unit 10h and connection unit 10i. Also, cables can be led via any other spool 12 and the additional spool 15 to obtain a suitable trajectory length.

It is noted that by using the redirection spool 15 in the configuration shown, a very suitable cable trajectory is obtained in which cable crossings are avoided. It will be understood that the layout shown in Fig. 1 may also be arranged horizontally rather than vertically, in which case the column 3 of spools 12 becomes a row. Likewise, the stack or column 2 of connection units 10 would become a row as well.

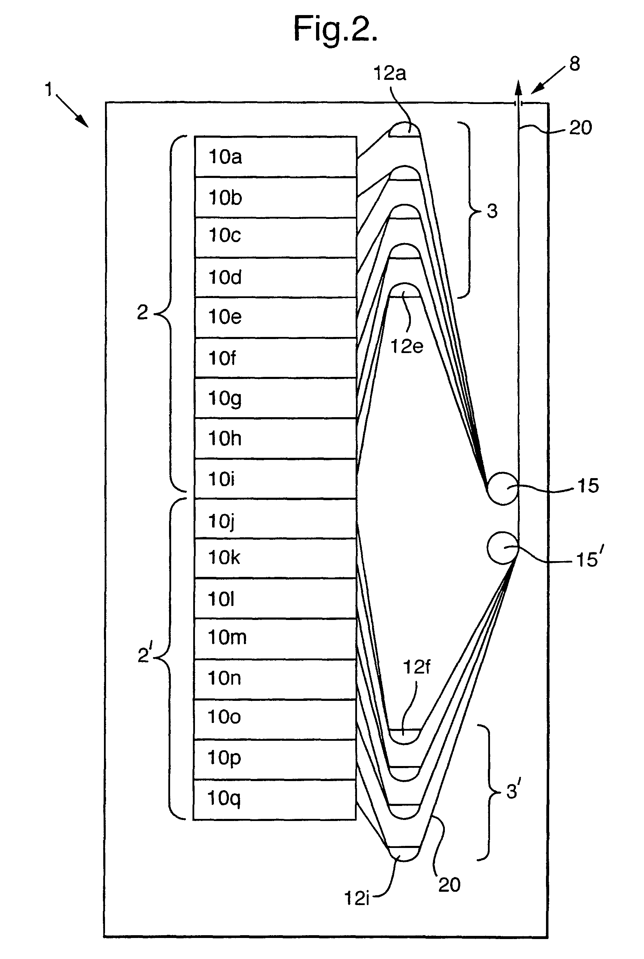

Fig. 2 shows an alternative embodiment of a rack 1 of the present invention in which more connection units 10 are accommodated. A further column 3' of spools 12h-12i is positioned next to the further stack 2' of connection units 10j-10q Also, a further redirection spool 15' is located approximately at a level with the unit 10j, the top unit of the further stack 2'. Thus the further spools mirror the layout of the original spools. That is, the approximate configuration of Fig. 2 may be obtained by mirror imaging the configuration of Fig. 1 relative to a line perpendicular to the longitudinal axis of the arrays 2 and 3. In the actual embodiment of Fig. 2, a perfect mirror image is not obtained due to the odd number of connection units 10.

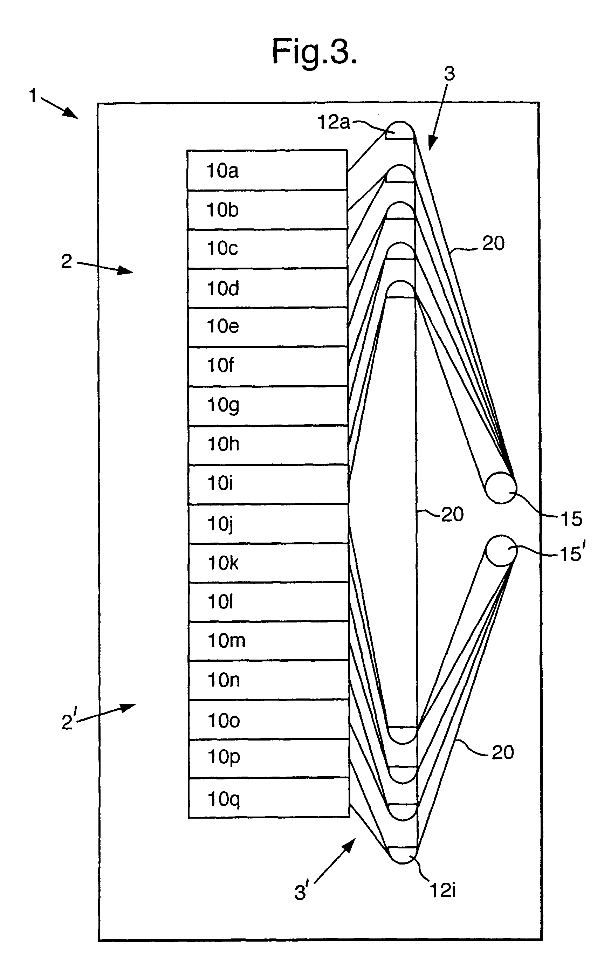

Fig. 3 shows yet another alternative embodiment of the rack 1 of the invention In this embodiment, the spools 12 and 15, 15' are used for mutually interconnecting rather than externally connecting the connection units 10. As can be appreciated from Fig. 3, the configuration of the invention is also suitable for feeding cables back to the same connection unit (for example from unit 10h back to unit 10h) via the redirection spool 15.

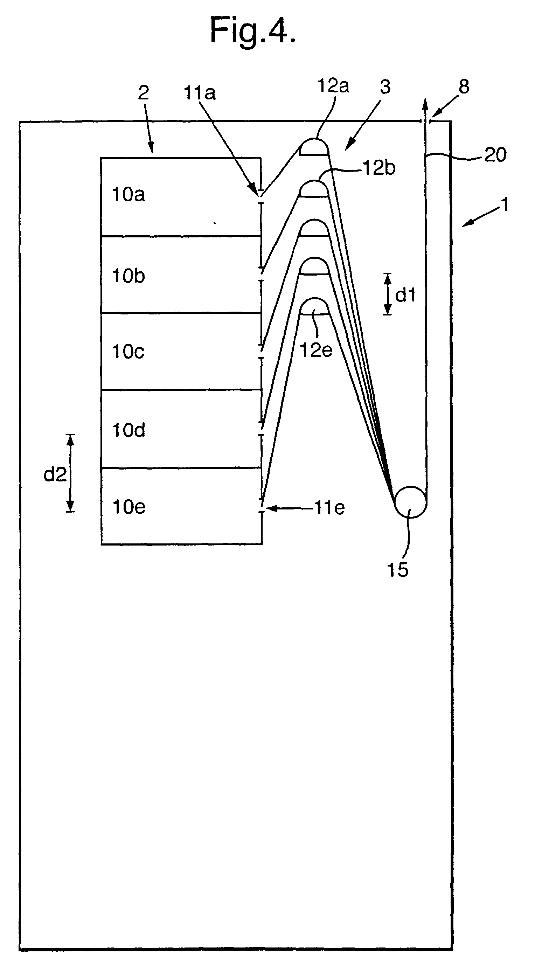

In the embodiment shown in Fig. 4 the connection units 10 have different dimensions. In this example, the spacing d2 between the access ports 11 of the units 10 is about twice the spacing d1 between the consecutive spools 12. As can be seen in Fig. 4, spool 12a is located relatively close to port 11a of connection unit 10a but, at the same time, relatively far from auxiliary spool 15. The next spool in the array 3, spool 12b, is located at a greater distance from its corresponding port 11b as the spacing d2 between the ports 11 is greater than the spacing between the spools 12. However, spool 12b is located at a smaller distance from auxiliary spool 15. It is therefore clear from Fig. 4 that consecutive spools 12 are located at an increasing distance from their respective associated connection units 10 and at an approximately correspondingly decreasing distance from the auxiliary spool 15.

It will be understood that the ports 11 of the connection units 10 are each provided with appropriate bend control means designed to ensure that the cables 20 are not bent at a radius smaller than their minimum bend radius. These bend control means are not shown in the figures for the sake of clarity.

It is noted that in the embodiment of Fig. 4 each spool 12 is associated with only one unit 10, whereas in the embodiments of Figs. 1-3 at least some spools 12 are associated with two (or possibly more) units 10. Due to the smaller spacing of the ports 1 in Figs. 1-3, it is possible for two units 10 to share a spool 12, the difference in cable lengths extending between the shared spool and the associated ports being small. This has the advantage of reducing the number of spools while maintaining sufficient spacing between the spools to allow an easy handling of the cables. In the embodiment of Fig. 4, the difference in cable lengths extending between a shared spool and the associated ports 11 would be much more significant and is therefore avoided in the configuration shown.

Although the auxiliary spool 15 is shown to be approximately at a level with the last (that is, lowest in a vertical arrangement) unit (10i in Figs. 1-3, 10e in Fig. 4) this is not essential. The auxiliary spool 15 could be positioned at any level beyond (that is, lower than) the last main guide spool 12e. In other words, in the example of Fig. 4 the auxiliary spool could be at a level with unit 10c or 10d, although the position shown is preferred.

In the description of the invention provided above it has been assumed that all connection units, or at least their access ports, have a substantially constant mutual spacing. It will be evident that if the spacing between the access ports of consecutive connection units varies, the mutual spacing of the spools may be varied accordingly.

It will therefore be understood by those skilled in the art that the present invention is not limited to the embodiments shown and that many additions and modifications are possible without departing from the scope of the present invention as defined in the appending claims.

## Claims

1. Rack (1) for optical fibre management, comprising:
• a longitudinal array (2) of connection units (10) for connecting optical fibre cables (20), each connection unit having an access port (11);
• a longitudinal array (3) of main guide members (12) for guiding optical fibre cables (20) to and/or from the access ports (11) of the connection units (10); and
• an auxiliary guide member (15) spaced apart from the longitudinal axis of the guide member array (3), away from the connection unit array (2),
the guide members array (3) being positioned substantially parallel to and spaced apart from the connection units array (2), the main guide members (12) and the auxiliary guide member (15) each being provided with a curved surface having a radius at least equal to a minimum bend radius of the optical fibre cables (20) to be guided, **characterised in that** the guide members array (3) extends from approximately one end of the connection units array (2) towards the middle thereof, the auxiliary guide member (15) being located beyond the guide members array (3), whereby consecutive main guide members (12) are located at a increasing distance from their respective associated access ports (11) and at an approximately correspondingly decreasing distance from the auxiliary guide member (15) so that all connection units (10) can be reached using a substantially uniform cable length.

2. Rack according to claim 1, wherein the number of main guide members (12) is approximately half the number of connection units (10), whereby at least some guide members are associated with a plurality of connection units.

3. Rack according to claim 1 or 2, wherein both the connection units array (2) and the guide members array (3) extend vertically.

4. Rack according to any of the preceding claims, wherein a further array (2') of connection units (10) is substantially aligned with the first connection units array (2), and wherein a further guide members array (3') and a further additional guide member (15') are positioned so as to substantially mirror the first guide members array (3) and the first additional guide member (15).

5. Rack according to claim 4, wherein the first guide members array (3) and the further guide members array (3') are spaced apart and substantially aligned.

6. Rack according to any of the preceding claims, wherein the guide members (12) within an array (3) and the connection units (10) within an array (2) have an approximately equal spacing, the number of guide members being less than the number of connection units.

7. Rack according to any of the preceding claims, wherein the main guide members (12) have a semicircular cross-section and the additional guide member (15) has a substantially circular cross-section.

8. Method of organising fibre optic cables (20) in an optical fibre management rack (1) comprising: a longitudinal array (2) of connection units (10), each connection unit having an access port (11) for connecting optical fibre cables (20), a longitudinal array (3) of main guide members (12) for guiding optical fibre cables (20) to and/or from the access ports (11) of the connection units (10), the guide members array (3) being positioned substantially parallel to and spaced apart from the connection units array (2) and extending from approximately one end of the connection units array towards the middle thereof, and an auxiliary guide member (15) spaced apart from the longitudinal axis of the guide member array (3), away from the connection unit array (2), **characterised by** leading the cables (20) from a connection unit (10) via a first main guide member (12) of the array (3) of main guide members and via the auxiliary guide member (15) either via a second main guide member (12) to a particular connection unit (10) or to an access port (8) of the rack, the first guide member (12) being chosen with respect to the connection unit (10) such that consecutive main guide members are located at an increasing distance from their respective associated access ports (11) and at an approximately corresponding decreasing distance from the auxiliary guide member (15), so as to provide cable trajectories having a substantially uniform lengthy, between the connection units and the auxiliary guide member.

9. Method according to claim 8, wherein the said first and second main guide members (12) are identical.

10. Method according to claim 8 or 9, wherein the number of main guide members (12) is smaller than the number of connection units (10) and wherein at least some main guide members are assigned to more than one connection unit (10).

## Patentansprüche

1. Gestell (1) zur Handhabung von Lichtwellenleitern, das folgendes aufweist:
- eine longitudinale Anordnung (2) von Verbindungseinheiten (10) zur Verbindung von Lichtwellenleiterkabeln (20), wobei jede Verbindungseinheit eine Zugangsöffnung (11) aufweist;
- eine longitudinale Anordnung (3) von Haupt-Führungselementen (12) zur Führung von Lichtwellenleiterkabeln (20) zu und/oder von den Zugangsöffnungen (11) der Verbindungseinheiten (10); und
- ein Hilfs-Führungselement (15), welches von der Längsachse der Führungselementanordnung (3), weg von der Verbindungselementanordnung (2), beabstandet ist,
wobei die Führungselementanordnung (3) im wesentlichen parallel zu und beabstandet von der Verbindungseinheitenanordnung (2) angeordnet ist und die Haupt-Führungselemente (12) und das Hilfs-Führungselement (15) jeweils mit einer gekrümmten Oberfläche mit einem Radius versehen sind, der mindestens gleich einem minimalen Krümmungsradius der zu führenden Lichtwellenleiterkabel (20) ist,
**dadurch gekennzeichnet,**
**daß** die Führungselementanordnung (3) sich ungefähr von dem einen Ende der Verbindungseinheitenanordnung (2) bis etwa zur Mitte dieser Anordnung erstreckt, wobei das Hilfs-Führungselement (15) jenseits der Führungselementanordnung (3) angeordnet ist, wobei aufeinander folgende Haupt-Führungselemente (12) mit einem zunehmenden Abstand von ihren jeweils zugeordneten Zugangsöffnungen (11) und mit einem ungefähr entsprechend abnehmenden Abstand von dem Hilfs-Führungselement (15) angeordnet sind, so daß alle Verbindungseinheiten (10) unter Verwendung einer im wesentlichen einheitlichen Kabellänge erreicht werden können.

2. Gestell nach Anspruch 1,
bei dem die Anzahl der Haupt-Führungselemente (12) ungefähr halb so groß ist wie die Anzahl von Verbindungseinheiten (10), wobei zumindest einige Führungselemente einer Mehrzahl von Verbindungseinheiten zugeordnet sind.

3. Gestell nach Anspruch 1 oder 2,
bei dem sich sowohl die Verbindungseinheitenanordnung (2) als auch die Führungselementanordnung (3) vertikal erstrecken.

4. Gestell nach einem der vorhergehenden Ansprüche,
bei dem eine weitere Anordnung (2') von Verbindungseinheiten (10) mit der ersten Verbindungseinheitenanordnung (2) im wesentlichen ausgerichtet ist und bei dem eine weitere Führungselementanordnung (3') und ein weiteres zusätzliches Führungselement (15') so angeordnet sind, daß sie im wesentlichen ein Spiegelbild der ersten Führungselementanordnung (3) und des ersten zusätzlichen Führungselementes (15) bilden.

5. Gestell nach Anspruch 4,
bei dem die erste Führungselementanordnung (3) und die weitere Führungselementanordnung (3') beabstandet und im wesentlichen ausgerichtet sind.

6. Gestell nach einem der vorhergehenden Ansprüche,
bei dem die Führungselemente (12) innerhalb einer Anordnung (3) und die Verbindungseinheiten (10) innerhalb einer Anordnung (2) eine ungefähr gleiche Beabstandung aufweisen, wobei die Anzahl der Führungselemente kleiner als die Anzahl der Verbindungseinheiten ist.

7. Gestell nach einem der vorhergehenden Ansprüche,
bei dem die Haupt-Führungselemente (12) einen halbkreisförmigen Querschnitt und das zusätzliche Führungselement (15) einen im wesentlichen kreisförmigen Querschnitt aufweisen.

8. Verfahren zum Organisieren von Lichtwellenleiterkabeln (20) in einem Gestell (1) zur Handhabung von Lichtwellenleitern, das folgendes aufweist:
eine longitudinale Anordnung (2) von Verbindungseinheiten (10), wobei jede Verbindungseinheit eine Zugangsöffnung (11) aufweist, zur Verbindung von Lichtwellenleiterkabeln (20), eine longitudinale Anordnung (3) von Haupt-Führungselementen (12) zur Führung von Lichtwellenleiterkabeln (20) zu und/oder aus den Zugangsöffnungen (11) der Verbindungseinheiten (10), wobei die Führungselementanordnung (3) im wesentlichen parallel zu und beabstandet von der Verbindungseinheitenanordnung (2) angeordnet ist und sich ungefähr von dem einen Ende der Verbindungseinheitenanordnung bis zur Mitte dieser Anordnung erstreckt, und ein Hilfs-Führungselement (15), welches von der Längsachse der Führungselementanordnung (3), weg von der Verbindungseinheitenanordnung (2) beabstandet ist,
**dadurch gekennzeichnet,**
**daß** die Kabel (20) von einer Verbindungseinheit (10) über ein erstes Haupt-Führungselement (12) der Anordnung (3) von Haupt-Führungselementen und über das Hilfs-Führungselement (15) entweder über ein zweites Haupt-Führungselement (12) zu einer bestimmten Verbindungseinheit (10) oder zu einer Zugangsöffnung (8) des Gestells geführt werden, wobei das erste Führungselement (12) in Bezug auf die Verbindungseinheit (10) so gewählt wird, daß aufeinander folgende Haupt-Führungselemente mit zunehmendem Abstand von ihren jeweils zugeordneten Zugangsöffnungen (11) und mit einem ungefähr entsprechend abnehmenden Abstand von dem Hilfs-Führungselement (15) angeordnet werden, um auf diese Weise Kabelwege zu erreichen, die zwischen den Verbindungseinheiten und dem Hilfs-Führungselement eine im wesentlichen einheitliche Länge aufweisen.

9. Verfahren nach Anspruch 8,
bei dem das erste und das zweite Haupt-Führungselement (12) identisch sind.

10. Verfahren nach Anspruch 8 oder 9,
bei dem die Anzahl der Haupt-Führungselemente (12) kleiner ist als die Anzahl der Verbindungseinheiten (10) und bei dem zumindest einige Haupt-Führungselemente mehr als einer Verbindungseinheit (10) zugeordnet sind.

## Revendications

1. Bâti (1) pour la gestion de fibres optiques, comportant:
• un groupement longitudinal (2) d'unités de connexion (10) pour la connexion de câbles (20) à fibres optiques, chaque unité de connexion ayant une ouverture d'accès (11);
• un groupement longitudinal (3) d'éléments principaux (12) de guidage destinés à guider des câbles (20) à fibres optiques vers les ouvertures d'accès (11) des unités de connexion (10) et/ou à partir de celles-ci; et
• un élément de guidage auxiliaire (15) espacé de l'axe longitudinal du groupement (3) d'éléments de guidage, à l'écart du groupement (2) d'unités de connexion,
le groupement (3) d'éléments de guidage étant positionné sensiblement parallèlement au groupement (2) d'unités de connexion et à distance de celui-ci, les éléments principaux (12) de guidage et l'élément auxiliaire de guidage (15) étant pourvus chacun d'une surface courbe ayant un rayon au moins égal à un rayon minimal de courbure des câbles (20) à fibres optiques devant être guidés,
**caractérisé en ce que** le groupement (3) d'éléments de guidage s'étend d'approximativement une extrémité du groupement (2) d'unités de connexion vers le milieu de celui-ci, l'élément auxiliaire (15) de guidage étant placé au-delà du groupement (3) d'éléments de guidage, grâce à quoi des éléments principaux consécutifs (12) de guidage sont placés à une distance croissante de leurs ouvertures d'accès associées respectives (11) et à une distance approximativement décroissante, de façon correspondante, de l'élément auxiliaire de guidage (15) afin que toutes les unités de connexion (10) puissent être atteintes en utilisant une longueur de câble sensiblement uniforme.

2. Bâti selon la revendication 1, dans lequel le nombre d'éléments principaux (12) de guidage est approximativement égal à la moitié du nombre d'unités de connexion (10), en sorte qu'au moins certains des éléments de guidage sont associés à plusieurs unités de connexion.

3. Bâti selon la revendication 1 ou 2, dans lequel le groupement (2) d'unités de connexion et le groupement (3) d'éléments de guidage s'étendent tous deux verticalement.

4. Bâti selon l'une quelconque des revendications précédentes, dans lequel un autre groupement (2') d'unités de connexion (10) est sensiblement aligné avec le premier groupement (2) d'unités de connexion,
et dans lequel un autre groupement (3') d'éléments de guidage et un autre élément de guidage additionnel (15') sont positionnés de façon à former sensiblement une image de miroir du premier groupement (3) d'éléments de guidage et du premier élément de guidage additionnel (15).

5. Bâti selon la revendication 4, dans lequel le premier groupement (3) d'éléments de guidage et l'autre groupement (3') d'éléments de guidage sont espacés et sensiblement alignés.

6. Bâti selon l'une quelconque des revendications précédentes, dans lequel les éléments de guidage (12) à l'intérieur d'un groupement (3) et les unités de connexion (10) à l'intérieur d'un groupement (2) ont un écartement approximativement égal, le nombre d'éléments de guidage étant inférieur au nombre d'unités de connexion.

7. Bâti selon l'une quelconque des revendications précédentes, dans lequel les éléments principaux (12) de guidage ont une section transversale semi-circulaire et l'élément de guidage additionnel (15) a une section transversale sensiblement circulaire.

8. Procédé d'organisation de câbles (20) à fibres optiques dans un bâti (1) de gestion de fibres optiques comportant: un groupement longitudinal (2) d'unités de connexion (10), chaque unité de connexion ayant une ouverture d'accès (11) pour la connexion de câbles (20) à fibres optiques, un groupement longitudinal (3) d'éléments principaux (12) de guidage pour le guidage de câbles (20) à fibres optiques vers les ouvertures d'accès (11) des unités de connexion (10) et/ou à partir de celles-ci, le groupement (3) d'éléments de guidage étant positionné sensiblement parallèlement au groupement (2) d'unités de connexion et à distance de celui-ci et s'étendant approximativement d'une extrémité du groupement d'unités de connexion vers le milieu de celui-ci, et un élément auxiliaire (15) de guidage espacé de l'axe longitudinal du groupement (3) d'éléments de guidage, à l'écart du groupement (2) d'unités de connexion, **caractérisé par le fait que** les câbles (20) sont conduits depuis une unité de connexion (10) en passant par un premier élément principal de guidage (12) du groupement (3) d'éléments principaux de guidage et en passant par l'élément auxiliaire de guidage (15), soit par l'intermédiaire d'un second élément principal (12) de guidage à une unité de connexion particulière (10), soit à une ouverture d'accès (8) du bâti, le premier élément de guidage (12) étant choisi par rapport à l'unité de connexion (10) de manière que des éléments principaux consécutifs de guidage soient placés à une distance croissante de leurs ouvertures d'accès associées respectives (11) et à une distance approximativement décroissante, de façon correspondante, de l'élément auxiliaire de guidage (15), afin d'établir des trajectoires de câbles ayant une longueur sensiblement uniforme entre les unités de connexion et l'élément auxiliaire de guidage.

9. Procédé selon la revendication 8, dans lequel lesdits premier et second éléments principaux (12) de guidage sont identiques.

10. Procédé selon la revendication 8 ou 9, dans lequel le nombre d'éléments principaux (12) de guidage est inférieur au nombre d'unités (10) de connexion et dans lequel au moins certains éléments principaux de guidage sont affectés à plus d'une unité (10) de connexion.
